## Europäisches Patentamt

## European Patent Office

## Office européen des brevets

(19)

(11) Numéro de publication: **0 193 460**
**B1**

(12) # FASCICULE DE BREVET EUROPEEN

(45) Date de publication du fascicule du brevet:
**26.10.88**

(51) Int. Cl.⁴: **C 01 G 23/00**

(21) Numéro de dépôt: **86400367.8**

(22) Date de dépôt: **21.02.86**

(54) **Titanate de néodyme et titanate de baryum néodyme, leurs procédés de préparation et leurs applications dans des compositions céramiques.**

(30) Priorité: **01.03.85 FR 8503024**

(43) Date de publication de la demande:
**03.09.86 Bulletin 86/36**

(45) Mention de la délivrance du brevet:
**26.10.88 Bulletin 88/43**

(84) Etats contractants désignés:
**AT BE CH DE FR GB IT LI LU NL SE**

(56) Documents cités:
**DE - A - 1 925 730**
**FR - A - 2 380 989**
**US - A - 3 983 077**

**CHEMICAL ABSTRACTS, vol. 75, no. 6, 9 août 1971, pages 579-580, no. 44339v, Columbus, Ohio, US; N.I. TIMOFEEVA et al.: "Synthesis and properties of rare earth titanates", & IZV. AKAD. NAUK SSSR, NEORG. MATER. 1971, 7(5), 890-1**

(73) Titulaire: **RHONE-POULENC CHIMIE, 25, quai Paul Doumer, F-92408 Courbevoie Cédex (FR)**

(72) Inventeur: **Colombet, Jean-FranCois, 17, Boulevard Richelieu, F-92500 Rueil Malmaison (FR)**
Inventeur: **Magnier, Claude, 3, Rue des Chaufourniers, F-75019 Paris (FR)**

(74) Mandataire: **Cazes, Jean-Marie et al, RHONE-POULENC INTERSERVICES Service Brevets Chimie 25, quai Paul Doumer, F-92408 Courbevoie Cédex (FR)**

### Déscription

L'invention concerne un procédé de préparation d'une poudre fine de titanate de néodyme ou de baryum néodyme, les titanates ainsi obtenus et leurs applications dans des compositions céramiques utilisées dans la fabrication de condensateurs ou de résistances.

Les titanates de néodyme et de baryum néodyme sont des matériaux très utilisés dans la préparation de compositions céramiques.

On connaît différentes méthodes de préparation d'une céramique de titanate de néodyme ou de baryum néodyme. En particulier, il est préparé par mélange de poudre d'oxyde de titane, d'oxyde ou de carbonate de néodyme et de carbonate de barium ou de titanate de baryum. Dans ce cas, la réaction de frittage s'effectue à des températures supérieure à 1400°C (Ber. Dt. Kearam Ges 55 [1978] N°7).

Un tel procédé présente plusieurs inconvénients.

Tout d'abord, la nécessité de conduire la réaction et le frittage à des températures élevées entraîne une consommation d'énergie importante.

Par ailleurs, on sait que dans la fabrication d'une composition diélectrique, outre le titanate de néodyme ou de baryum néodyme, on utilise des matériaux qui servent à assurer le contact entre les différentes couches de titanate formant le diélectrique. Or, compte tenu de ce que la réaction de frittage a lieu à haute température, il est nécessaire d'utiliser des matériaux pouvant tenir dans ces conditions et donc présentant des points de fusion élevés. On est donc amené, par exemple dans le cas des condensateurs, à choisir des métaux précieux tels que l'argent, le platine et le palladium par exemple.

Le but de l'invention est de fournir un titanate de néodyme ou de baryum néodyme pouvant fritter à basse température et permettant de réaliser ainsi des économies importantes en énergie et en matière première.

Un autre but de l'invention est de fournir un procédé permettant une bonne réactivité entre les composants de celle-ci et qui permette d'obtenir des poudres possèdant une excellente homogénéité, cette homogénéité correspondant soit à l'obtention de phases cristallographiquement pures soit à une excellente répartition dans chaque grain ou agglomérat de la poudre des ions qui la composent.

Un autre but visé par la présente invention est de fournir un titanate de néodyme ou de baryum néodyme frittant rapidement, c'est-à-dire dont la densité mesurée après chauffage 2 heures à 1300°C soit supérieure ou égale à 95% de la densité théorique du titanate désiré. Le frittage rapide permet de réaliser d'importantes économies d'énergie et d'obtenir une excellente productivité.

Enfin, la présente invention vise à fournir un titanate de baryum néodyme dont l'utilisation dans les formulations NPO conduira à des condensateurs dont la variation de la constante diélectrique en fonction de la température est très réduite.

La présente invention permet également d'obtenir une poudre très fine de titanate de néodyme ou de baryum néodyme et qui est obtenue avec une excellente reproductibilité. Cette poudre, qui est uniformément stoechiométrique au niveau microscopique, est particulièrement adaptée à la fabrication de produits céramiques en association avec d'autres composés par réaction à l'état solide.

Ces objectifs sont atteints par le procédé de préparation de la poudre fine de titanate de néodyme ou de baryum néodyme selon l'invention qui est caractérisé en ce qu'il comporte les étapes suivantes:

– on mélange d'une part un sol de titane présentant un pH compris entre 0,8 et 2,5 et constitué de cristallites élémentaires de $TiO_2$ de tailles comprises entre 10 et 100Å, agglomérés en amas submicroniques ayant des tailles de 200 à 1000Å et d'autre part une solution de nitrate de néodyme ou une solution de nitrate de baryum et de nitrate de néodyme;

– on opère ensuite le séchage de la suspension obtenue;

– le produit séché est calciné à une température comprise entre 800°C et 1300°C pendant un temps compris entre 30mn et 24h

– on opère éventuellement le broyage de la poudre obtenue.

Le sol de titane présentant un pH compris entre 0,8 et 2,5 et de préférence entre 1,8 et 2,2 et constitué de cristallites élémentaires de $TiO_2$ de tailles comprises entre 10 et 100Å, agglomérés en amas submicroniques ayant des tailles comprises entre environ de 200 et 1000Å peut être obtenu par toute technique appropriée et en particulier par peptisation d'un gel de dioxide de titane ayant les mêmes tailles de cristallites élémentaires que le sol désiré mais comportant des amas macroscopiques de l'ordre du micron.

Selon un mode de mise en œuvre préféré de l'invention, on peptise de préférence un gel de dioxide de titane dont les cristallites élémentaires ont une taille de l'ordre de 50Å agglomérés en amas submicroniques de 400Å environ et contenant éventuellement des amas macroscopiques de l'ordre du micron. Ce gel peut être obtenu lors du procédé classique de préparation du dioxide de titane par attaque sulfurique de l'ilmenite; sa teneur en ions sulfates est comprise entre 3 et 15% et de préférence entre 6 et 8% et son acidité est telle que le pH de la suspension aqueuse (300g/l exprimé en $TiO_2$) est compris entre 1 et 3. Ce gel peut également être préparé par hydrolyse à chaud d'une solution sulfurique d'oxychlorure de titane, cet oxychlorure de titane provenant de $TiCl_4$.

Le gel peptisé qui est composé essentiellement d'eau et de $TiO_2$, ne doit pas présenter une concentration en $TiO_2$ trop faible, car une teneur en eau trop importante rendrait plus difficile et plus long le séchage du sol obtenu ultérieurement dans la suite du procédé. Par contre, il s'avère qu'une teneur en $TiO_2$ trop élevée peut aussi gêner le bon déroulement du procédé. De préférence, on partira d'un gel peptisé ayant une teneur en poids en $TiO_2$ de 5 à 35% et selon un mode de réalisation particulier de l'invention on utilisera un gel peptisé ayant une teneur en $TiO_2$ de 15%.

Selon le procédé de l'invention, on mélange ensuite au sol ou à la suspension obtenue par peptisation du gel une solution de nitrate de néodyme ou une solution de nitrate de baryum et de nitrate de néodyme. La concentration de ces solutions est telle que la concentration du nitrate de baryum est comprise entre 2 et 20% en poids exprimée en $Ba(NO_3)_2$ et la concentration du nitrate de néodyme est comprise entre 5 et 60% en poids exprimée en $Nd(NO_3)_3, 6H_2O$.

A l'issue de l'étape d'introduction de la solution du nitrate de néodyme ou de la solution du nitrate de baryum et de nitrate de néodyme, on obtient une suspension parfaitement homogène du titane dans la solution des autres éléments.

Selon l'invention, les proportions relatives de baryum, titane, néodyme ne sont pas critiques. Ces proportions sont choisies en fonction des connaissances de l'homme de l'art fondées sur la littérature et qui décrivent les compositions finales qui présentent les caractéristiques céramiques optimales.

La suspension ainsi obtenue contient environ 3 à 35% de matière sèche. Elle doit ensuite être séchée.

Ce séchage pourra se faire par tout moyen connu, notamment par atomisation, c'est-à-dire par pulvérisation de la solution dans une atmosphère chaude.

Préférentiellement, on réalise ce séchage dans un réacteur «flash», par exemple du type mis au point par la Demanderesse et décrit notamment dans les brevets français n° 2257326, 2419754, 2431321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz ce qui permet de transférer parfaitement la quantité de mouvement des gaz aux particules de cette suspension. Par ailleurs, le temps de séjour des particules dans le réacteur est extrèmement faible, il est inférieur à $\frac{1}{10}$ de seconde, ce qui supprime tout risque de surchauffe par suite d'un contact trop long avec les gaz.

Selon les débits respectifs des gaz et de la suspension, la température d'entrée des gaz est comprise entre 400 et 700°C, la température du solide séché entre 150 et 350°C. Selon un mode de mise en œuvre préféré, la température du solide séché est voisine de 230°C.

On obtient un produit sec présentant une granulométrie de l'ordre de quelques µm, comprise entre 1 et 10 µm par exemple.

Le produit sec est ensuite calciné.

La calcination est opérée à une température comprise entre 800 et 1300°C et de préférence entre 1000 et 1150°C. La durée de la calcination peut varier entre 30 minutes et 24 heures par exemple et de préférence de 6 à 15 heures.

A la suite de cette calcination, on obtient une poudre de titanate de néodyme ou de titanate de baryum et de néodyme présentant une granulométrie macroscopique de 1 à 10 µm environ, les grains de 1 à 10 µm étant constitués de cristallites élémentaires ou d'amas submicroniques de taille de 500 Å à 8000 Å environ.

Les produits obtenus doivent généralement être broyés pour obtenir des poudres utilisables constituées de cristallites élémentaires d'une dimension comprise entre 500 et 8000 Å et de préférence entre 1000 et 5000 Å. La répartition granulométrique de la poudre se situe alors entre environ 0,5 et 3 µm.

L'évolution de la température et du temps de calcination corrélé avec la dimension des particules permet de dégager les tendances suivantes: plus la température de calcination est basse, plus il est nécessaire d'augmenter le temps de calcination; plus la température de calcination est élevée, plus le temps peut diminuer.

Les caractéristiques de la poudre de titanate de néodyme ou de titanate de baryum néodyme sont déterminées de la façon suivante:

On mélange la poudre de titanate avec un liant en proportion pondérale de 2%, ce liant étant choisi parmi les liants bien connus dans la technique, par exemple le Rhodoviol $\frac{4}{20}$®.

Le mélange est pastillé, sous une pression de 2T/cm². On procède au frittage.

Les poudres de titanate de néodyme ou de baryum néodyme obtenues selon l'invention possèdent des propriétés particulièrement intéressantes. En effet, elles frittent à basse température puisque leur densité mesurée à 1300°C après chauffage pendant 2 heures est supérieure ou égale à 95% de la densité théorique du titanate.

Les poudres de titanate de néodyme ou de baryum néodyme selon l'invention sont utilisables dans la fabrication des condensateurs à NPO à faible constante diélectrique et des résistances selon les procédés et dans les formulations connues dans ces domaines.

D'autres avantages et aspects de l'invention apparaîtront à la lecture des exemples qui suivent.

Exemple 1

On part de 1066g d'un sol de titane à 15% en poids en $TiO_2$. Le pH de la suspension est de 1,7. La suspension est constituée d'amas submicroniques d'environ 400 Å formés de cristallites élémentaires d'environ 50 Å.

On mélange ensuite le sol de titane à 1156g d'une solution de $Nd(NO_3)_3$ (29,1% en poids en $Nd_2O_3$ (rapport Nd/Ti = 1).

Après homogénéisation par agitation durant 15 mn, le mélange est séché par atomisation.

Le séchage a lieu dans le réacteur «flash» décrit dans les brevets français n° 2257326, 2419754 et 2431321. La température d'entrée des gaz est de 650°C, la température de séchage de 230°C.

On obtient alors 860g de produit séché. Il est constitué d'agglomérats sphériques de granulométrie comprise entre 1 et 10 μm.

Le produit séché est calciné à 1050°C durant 6 heures. La vitesse de montée en température est de 9°C par minute.

On obtient alors 496g de $Ti_2,Nd_2O_7$.

L'examen cristallographique confirme la présence de la seule phase $Ti_2,Nd_2O_7$ cristallisée et donc l'excellente homogénéité chimique des produits obtenus selon le procédé de l'invention.

Le titanate de néodyme est alors broyé.

La répartition granulométrique est alors comprise entre 0,5 et 3 μm.

La taille des cristallites élémentaires se situe entre 0,1 et 0,6 μm.

Le frittage du titanate de néodyme s'effectue après pastillage à sec sous une pression de 2t/$cm^2$. Le frittage s'effectue à 1300°C durant 2 heures (montée en température de 5°C/mn).

La densité après frittage est égale à 95 % de la densité théorique.

Exemple 2

On part de 1066g d'un sol de titane à 15 % en poids de $TiO_2$. Le pH de la suspension est de 1,7. La suspension obtenue est constituée d'amas submicroniques d'environ 400 Å formés de cristallites élémentaires d'environ 50 Å.

On mélange ensuite le sol de titane à 578g d'une solution de $Nd(NO_3)_3$ (29,1 % en poids en $Nd_2O_3$) et à 4000g d'une solution de $Ba(NO_3)_2$ (3,83 % en poids au BaO).

Après homogénéisation par agitation durant 15mn, le mélange est séché par atomisation. Les conditions de séchage sont identiques à celles de l'exemple 1.

On obtient alors 668g de produit séché. Il est constitué d'agglomérats sphériques de taille comprise entre 1 et 10 μm.

Le produit séché est calciné dans les mêmes conditions que celles de l'exemple 1. On obtient alors 481g d'oxyde correspondant à la formule empirique calculée suivante: $Ba_{0,5}Nd_{0,5}TiO_{3,25}$.

Le titanate de baryum néodyme obtenu est broyé.

La répartition granulométrique est comprise entre 0,5 et 3 μm.

La taille des cristallites élémentaires se situe entre 0,1 et 0,5 μm.

Après frittage à 1300°C durant 6 heures (mêmes conditions que dans l'exemple 1) la densité est égale à 96 % de la densité théorique.

Exemple 3

Les caractéristiques du sol de titane sont identiques à celles de l'exemple 1.

On mélange ensuite 1066g du sol de titane à 768,7g d'une solution de $Nd(NO_3)_3$ (29,1 % en poids en poids en $Nd_2O_3$) et à 2640g d'une solution de $Ba(NO_3)_2$ (3,83 % en poids en BaO).

Après homogénéisation par agitation durant 15mn, le mélange est séché par atomisation, dans les mêmes conditions que pour l'exemple 1.

On obtient alors 765g de produit séché, constitué d'agglomérats sphériques de taille comprise entre 1 et 10 μm.

Le produit séché est calciné dans les mêmes conditions que celles de l'exemple 1. On obtient alors 481,5g d'oxyde correspondant à la phase $BaNd_2Ti_3O_{10}$.

Un examen cristallographique confirme l'existence de cette seule phase et donc l'excellente homogénéité chimique de la poudre.

Le titanate de baryum néodyme est alors broyé.

La répartition granulométrique est comprise entre 0,5 et 3 μm.

La taille des cristallites élémentaires se situe entre 0,2 et 0,6 μm.

Après frittage à 1300°C durant 6 heures (mêmes conditions que dans l'exemple 1) la densité est égale à 97 % de la densité théorique.

**Revendications**

1) Procédé de préparation d'une poudre fine de titanate de néodyme ou de baryum néodyme caractérisé en ce qu'il comporte les étapes suivantes:

– on mélange d'une part un sol de titane présentant un pH compris entre 0,8 et 2,5 et constitué de cristallites élémentaires de $TiO_2$ de tailles comprises entre 10 et 100 Å (1–10 nm), agglomérés en amas submicroniques ayant des tailles de 200 à 1000 Å (20–100 nm) et d'autre part une solution de nitrate de néodyme ou une solution de nitrate de baryum et de nitrate de néodyme;

– on opère ensuite le séchage de la suspension obtenue;

– le produit séché est calciné à une température comprise entre 800°C et 1300°C pendant un temps compris entre 30 mn et 24 h

– on opère éventuellement le broyage de la poudre obtenue.

2) Procédé selon la revendication 1 caractérisé en ce que la concentration du nitrate de baryum est comprise entre 2 et 20 % en poids exprimée en $Ba(NO_3)_2$ et la concentration du nitrate de néodyme est comprise entre 5 et 60 % en poids exprimée en $Nd(NO_3)_3 \cdot 6H_2O$.

3) Procédé selon la revendication 1 caractérisé en ce que le séchage de la suspension est opéré de la façon suivante: la suspension est injectée suivant une trajectoire confondue avec l'axe de symétrie des trajectoires hélicoïdales des gaz ce qui permet de transférer parfaitement la quantité de mouvement des gaz aux particules de cette suspension; le temps de séjour des particules dans le réacteur est extrèmement faible, il est inférieur à 1/10 de seconde; les débits respectifs des gaz et de la suspension, la température d'entrée des gaz est comprise entre 400 et 700°C, la température du solide séché entre 150 et 350°C.

4) Procédé selon la revendication 1 caractérisé en ce que la calcination est opérée à une température comprise entre 800 et 1300°C.

5) Procédé selon la revendication 4 caractérisé en ce que la température est comprise entre 1000 et 1150°C.

6) Procédé selon la revendication 4 ou 5 caractérisé en ce que la durée de calcination varie entre 30 minutes et 24 heures.

7) Procédé selon la revendication 6 caractérisé en ce que cette durée est comprise entre 6 et 15 heures.

## Patentansprüche

1. Verfahren zur Herstellung eines feinen Pulvers von Neodymtitanat oder Neodym-Barium-Titanat, dadurch gekennzeichnet, dass es die folgenden Schritte enthält:
- man vermischt ein Titandioxidsol mit einem pH-Wert zwischen 0,8 und 2,5, das aus Elementarkristalliten von $TiO_2$ mit Grössen zwischen 10 und 100 Å (1−10 nm) besteht, die zu Submikron-Häufchen von 200 bis 1000 Å (20−100 nm) zusammengeballt sind, einerseits, mit einer Bariumnitrat- oder Bariumneodymnitratlösung andererseits;
- die erhaltene Suspension wird getrocknet;
- das getrocknete Produkt wird bei einer Temperatur zwischen 800°C und 1300°C während einer Zeit zwischen 30 min und 24 h kalziniert;
- gegebenenfalls wird das erhaltene Pulver gemahlen.

2. Verfahren nach Anspruch 1, dadurch gekennzeichnet, dass die Konzentration des Bariumnitrats zwischen 2 und 20 Gewichtsprozent, ausgedrückt in $Ba(NO_3)_2$, und die Konzentration des Neodymnitrats zwischen 5 und 60 Gewichtsprozent, ausgedrückt in $Nd(NO_3)_3 \cdot 6H_2O$ liegt.

3. Verfahren nach Anspruch 1, dadurch gekennzeichnet, dass die Trocknung der Suspension folgendermassen erfolgt: Die Suspension wird entsprechend einer Bahn eingespritzt, die mit der Symmetrieachse der schraubenförmigen Bahnen der Gase zusammenfällt, was die vollkommene Übertragung des Impulses der Gase auf die Teilchen dieser Suspension erlaubt; die Verweildauer der Teilchen im Reaktor ist extrem gering, kleiner als 1/10 Sekunde; den jeweiligen Durchsatzmengen der Gase und der Suspension entsprechend liegt die Eintrittstemperatur der Gase zwischen 400 und 700°C und die des getrockneten Feststoffes zwischen 150°C und 350°C.

4. Verfahren nach Anspruch 1, dadurch gekennzeichnet, dass die Kalzination bei einer Temperatur zwischen 800 und 1300°C durchgeführt wird.

5. Verfahren nach Anspruch 4, dadurch gekennzeichnet, dass die Temperatur zwischen 1000 und 1150°C liegt.

6. Verfahren nach Anspruch 4 oder 5, dadurch gekennzeichnet, dass die Dauer der Kalzination zwischen 30 Minuten und 24 Stunden liegt.

7. Verfahren nach Anspruch 6, dadurch gekennzeichnet, dass diese Dauer zwischen 6 und 15 Stunden liegt.

## Claims

1. Process for the preparation of a fine powder of neodymium titanate or of barium neodymium titanate, characterized in that it comprises the following stages:
- a mixture is prepared from, on the one hand, a titania sol having a pH of between 0,8 and 2,5 and consisting of elementary crystallites of $TiO_2$ of sizes between 10 and 100 Å (1−10 nm), agglomerated into sub-micron masses having sizes from 200 to 1000 Å (20−100 nm) and, on the other hand, a solution of neodymium nitrate or a solution of barium nitrate and neodymium nitrate;
- the suspension obtained is then dried;
- the dried product is calcined at a temperature of between 800 and 1300°C for a time of between 30 mins and 24 h; and
- optionally, the powder obtained is ground.

2. Process according to Claim 1, characterized in that the concentration of barium nitrate is between 2 and 20% by weight expressed as $Ba(NO_3)_2$ and the concentration of neodymium nitrate is between 5 and 60% by weight expressed as $Nd(NO_3)_3 \cdot 6H_2O$.

3. Process according to Claim 1, characterized in that the drying of the suspension is carried out as follows: the suspension is injected along a path which coincides with the axis of symmetry of the spiral paths of the gases, which permits perfect transfer of the amount of movement of the gases to the particles of this suspension; the dwell time of the particles in the reactor is extremely low, namely less than 1/10 of a second; ...(sic) the respective feed rates of the gases and the suspension, the entry temperature of the gases is between 400 and 700°C and the temperature of the dried solid is between 150 and 350°C.

4. Process according to Claim 1, characterized in that the calcination is carried out at a temperature of between 800 and 1300°C.

5. Process according to Claim 4, characterized in that the temperature is between 1000 and 1150°C.

6. Process according to Claim 4 or 5, characterized in that the calcination time varies between 30 minutes and 24 hours.

7. Process according to Claim 6, characterized in that this time is between 6 and 15 hours.